# EUROPÄISCHE PATENTSCHRIFT

(11) **EP 0 828 629 B1**
(45) Veröffentlichungstag und Bekanntmachung des Hinweises auf die Patenterteilung: **29.03.2000**
(21) Anmeldenummer: 96943942.1
(22) Anmeldetag: 12.12.1996
(51) Int. Cl.: B60M 1/234, B60M 1/26

(54) **VERFAHREN UND VORRICHTUNG ZUR KOPPLUNG VON ELASTISCHEN UND STARREN FAHRLEITUNGSSYSTEMEN**
PROCESS AND DEVICE FOR COUPLING FLEXIBLE AND RIGID CONTACT LINE SYSTEMS
PROCEDE ET DISPOSITIF D'ACCOUPLEMENT DE SYSTEMES DE LIGNES DE CONTACT FLEXIBLES ET RIGIDES

(30) Priorität: 01.04.1996 CH 84396
(43) Veröffentlichungstag der Anmeldung: 18.03.1998
(73) Patentinhaber: Furrer + Frey AG Ingenieurbüro, 3000 Bern 6 (CH)
(72) Erfinder: FURRER, Beat, CH-3012 Bern (CH)
(74) Vertreter: von Bülow, Tam, Dr.
(86) Internationale Anmeldenummer: EP9605580
(87) Internationale Veröffentlichungsnummer: WO9736764

(56) Entgegenhaltungen:
- FR-A- 2 470 020
- GB-A- 2 201 133
- US-A- 4 230 209

## Beschreibung

Die Erfindung betrifft ein Verfahren und eine Vorrichtung zur Kopplung von elastischen und starren Fahrleitungssystemen. Zur Speisung elektrisch angetriebener Fahrzeuge, insbesondere von Schienenfahrzeugen, werden Fahrleitungen als hängende Drahtwerke über dem Gleis angeordnet, die den elektrischen Triebfahrzeugen über Stromabnehmer die elektrische Energie zuführen. Die Fahrdrähte sind in europäischen Normen definiert. Der Fahrdraht wird mittels in kurzen Abständen aufgehängten Hängedrähten an einem Tragseil aufgehängt, wobei die Tragpunkte an den Tragseilen etwa 30 bis 180 cm höher als der Fahrdraht liegen. Der vertikale Abstand zum Gleis an den Tragpunkten wird Systemhöhe genannt. Aus wirtschaftlichen Gründen muß in Tunneln und bei Überbauten die Systemhöhe gezwungenermaßen sehr klein ausgeführt werden. Ferner sind die Fahrdrähte und Tragseile mit 8 bis 30 kN mechanisch gespannt, um Beschleifgeschwindigkeiten durch die Stromabnehmer bis 500 km/h zu erlauben. Die notwendigen Spannvorrichtungen sind komplexe Anlagen, welche insbesondere in unterirdisch verlegten Tunnelstrecken schwierig anzuordnen sind, da sie zusätzlichen Raum beanspruchen. Ferner drückt noch der Stromabnehmer mit 70 bis 300 N den Fahrdraht hoch, was weiteren Raum beansprucht. Aus diesen Gründen wurden für Stellen mit beschränkten Raumverhältnissen, wie z.B. in Tunneln oder Überbauten, starre Stromschienen eingeführt, was insbesondere die Systemhöhe verringert. Der Übergang von der elastischen Fahrleitung zur starren Stromschiene, d.h. die Kopplung zwischen der als hängendes Drahtwerk ausgeführten Fahrleitung und der starren Stromschiene bereitet dabei jedoch Probleme. Üblich ist es, den Fahrdraht der Fahrleitungen als hängendes Drahtwerk parallel zu der starren Stromschiene zu führen, was allerdings die Durchfahrt bei hohen Geschwindigkeiten erschwert und die Abnutzung des Stromabnehmers erhöht. Zudem besteht die Gefahr, daß der Stromabnehmer zwischen die Fahrdrähte einfädelt und diese herunterreißt, was den Bahnbetrieb auf der Strecke zum Erliegen bringt.

Aufgabe der vorliegenden Erfindung ist es, ein Verfahren und eine Vorrichtung anzugeben, die die oben erwähnten Nachteile beseitigt und insbesondere bei geringem Aufwand eine gute Kopplung zwischen einer elastischen Fahrleitung als hängendes Drahtwerk und einer starren Stromschiene gestattet, die mit hohen Geschwindigkeiten befahren werden kann, geringen Verschleiß hat und eine lange Lebensdauer.

Diese Aufgabe wird für das Verfahren durch die im Patentanspruch 1 und für die Vorrichtung durch die im Patentanspruch 4 angegebenen Merkmale gelöst. Vorteilhafte Ausgestaltungen und Weiterbildungen der Erfindung sind den Unteransprüchen zu entnehmen.

Das Grundprinzip der Erfindung besteht darin, die elastische Fahrleitung und die starre Stromschiene seriell elastisch zu koppeln. Konkreter wird in Längsrichtung des Fahrleitungssystems ein elastischer Übergangsbereich zwischen der starren Stromschiene und der als Hängedraht ausgeführten flexiblen Fahrleitung geschaffen. Dieser elastische Übergangs- oder Kopplungsbereich wird durch einen speziell geformten Federbalken realisiert, dessen Elastizität von seinem stromschienenseitigen Ende zum fahrleitungsseitigen Ende zunimmt. Die Kopplungsstelle zwischen starren und flexiblen Fahrleitungsteilen wird somit über eine größere Strecke verteilt, wodurch die infolge des Zusammenwirkens zwischen Stromabnehmer und Fahrdraht entstehende biegewechselmäßige Beanspruchung des Fahrdrahtes auf eine größere mechanische Länge verteilt wird und damit besser gedämpft wird. Der Fahrdraht wird seriell zur starren Stromschiene und der Fahrleitung als hängenden Drahtwerk geführt, also ohne seitlichen Versatz des stromführenden Pfades. Aufgrund der elastischen Kopplung ist das Risiko von Ermüdungsbrüchen am Fahrdraht stark reduziert.

Nach einer Weiterbildung der Erfindung hat der Federbalken im wesentlichen dasselbe Querschnittsprofil wie die starre Stromschiene, jedoch in Längsrichtung Ausnehmungen, die die mechanische Steifigkeit des Federbalkens in seiner Längsrichtung stetig variieren.

Die Kopplung des Federbalkens mit der starren Stromschiene erfolgt durch Stoßlaschen, die im Inneren der Profile von Stromschiene und Federbalken angeordnet sind und mit Längsrippen versehen sind. Die Stoßlaschen verbinden den Federbalken mit dem Stromschienensystem damit mechanisch und elektrisch. Vorzugsweise sind die Stoßlaschen im Querschnitt konisch bzw. mit Abschrägungen geformt.

Im folgenden wird die Erfindung anhand der Zeichnungen näher erläutert. Es zeigt:
- Fig. 1: ein Ausführungsbeispiel einer Kopplungsanordnung;
- Fig. 2: verschiedene Seitenansichten der Federbalken gemäß mehreren Varianten der Erfindung;
- Fig. 3: einen Querschnitt durch den Federbalken im Bereich der Stoßlaschen;
- Fig. 4: einen Querschnitt einer Stoßlasche;
- Fig. 5: eine Draufsicht einer Verbindungsstelle mit Stoßlaschen sowie noch einmal einen verkleinerten Querschnitt einer Stoßlasche; und
- Fig. 6: einen Querschnitt einer starren Stromschiene mit von ihr gehaltenem Fahrdraht.

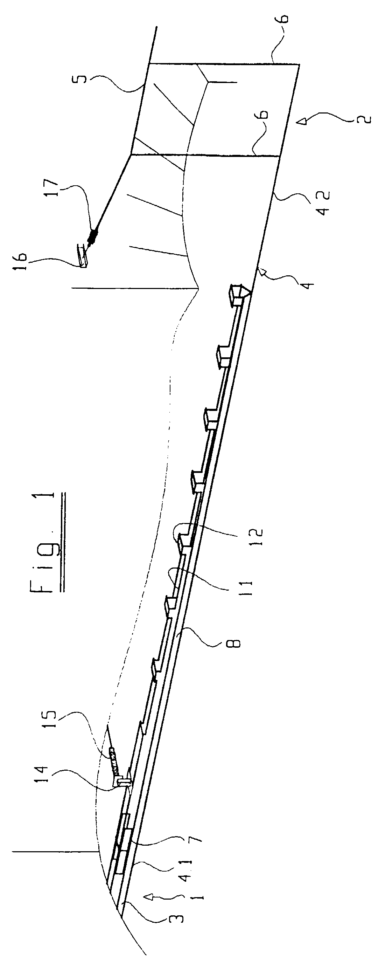

In Fig. 1 ist ein Stromschienensystem 1 dargestellt, das aus einer starren Stromschiene 3 und einer Fahrdrahtsektion 4.1 besteht sowie ein elastisches Fahrleitungssystem 2, das als hängendes Drahtwerk ausgebildet ist und aus einem Tragseil 5, mehreren Hängedrähten 6 und einer Fahrdrahtsektion 4.2 besteht. Der Fahrdraht insgesamt ist mit 4 bezeichnet. Die der starren Stromschiene zugeordnete Sektion des Fahrdrahtes 4 ist mit 4.1, die dem flexiblen, als hängendes Drahtwerk zugeordnete Sektion mit 4.2 bezeichnet.

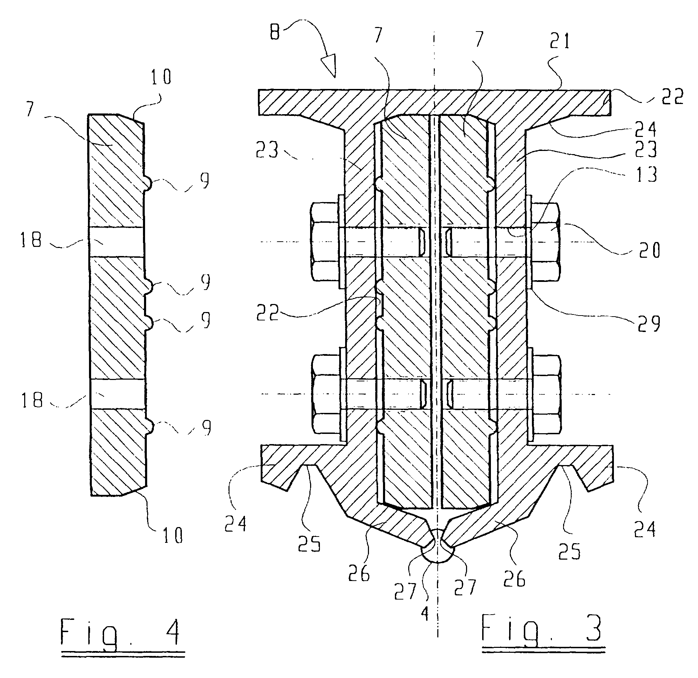

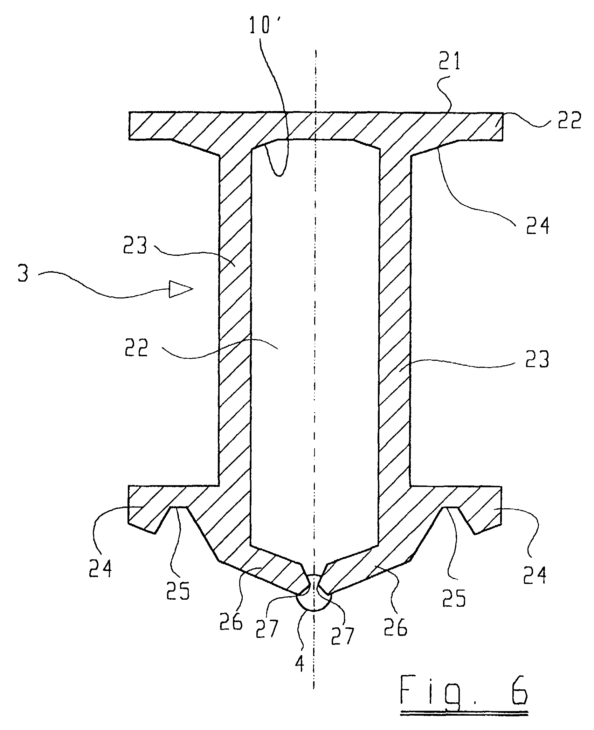

In einem Übergangs- oder Kopplungsbereich zwischen den beiden Fahrdrahtsektionen 4.1 und 4.2 ist ein elastischer Federbalken 8 angeordnet, der mittels Stoßlaschen 7 an die starre Stromschiene 3 angebracht ist und durch diese Stoßlaschen 7 mechanisch und elektrisch mit der Stromschiene 3 verbunden wird. Wie im Zusammenhang mit den Fig. 3 und 6 noch deutlicher wird, ist der Fahrdraht 4 im Profil des Federbalkens und der Stromschiene eingeklemmt, und zwar so, daß er nach unten noch aus dem Profil herausragt und somit den Kontakt zum Stromabnehmer des Fahrzeuges herstellt. Der Fahrdraht 4.1 ist längs der gesamten Stromschiene eingelegt. Das Stromschienenprofil übernimmt damit nicht die Funktion des Fahrdrahtes. Vielmehr behält dieser seine Funktion bei, was den großen Vorteil hat, daß die Stromabnehmer den Strom immer am gleichen Medium, dem Fahrdraht, der beispielsweise als Kupferdraht ausgebildet ist, abnehmen können und weiter, daß der Fahrdraht als Verschleißteil nach Abnutzung einfach ausgewechselt werden kann und das Trägermaterial, d.h. die Stromschiene ihren ursprünglichen Querschnitt erhalten kann und nicht dem Verschleiß unterliegt. Der Federbalken 8 hat im Prinzip dasselbe Querschnittsprofil wie die Stromschiene. Er hat jedoch über seine Länge verteilt mehrere Ausnehmungen 11, deren Tiefe von der Stromschiene 3 zum hängenden Fahrdraht 4.2 zunimmt, wodurch auch die Elastizität des Federbalkens in der gleichen Richtung zunimmt. Zwischen den Ausnehmungen 11 bleiben somit Teile 12 des vollständigen Profiles stehen.

Die Stromschiene 3 und der Federbalken 8 sind mittels Befestigungslaschen 14 und Isolatoren 15 an nicht dargestellten Tragpunkten befestigt. Diese Tragpunkte haben beispielsweise einen Abstand von 8 m zueinander. Die Befestigung des Tragseiles 5 erfolgt im dargestellten Ausführungsbeispiel der Einfahrt in einen Tunnel mittels eines Halteorganes 16 und eines elektrischen Isolators 17.

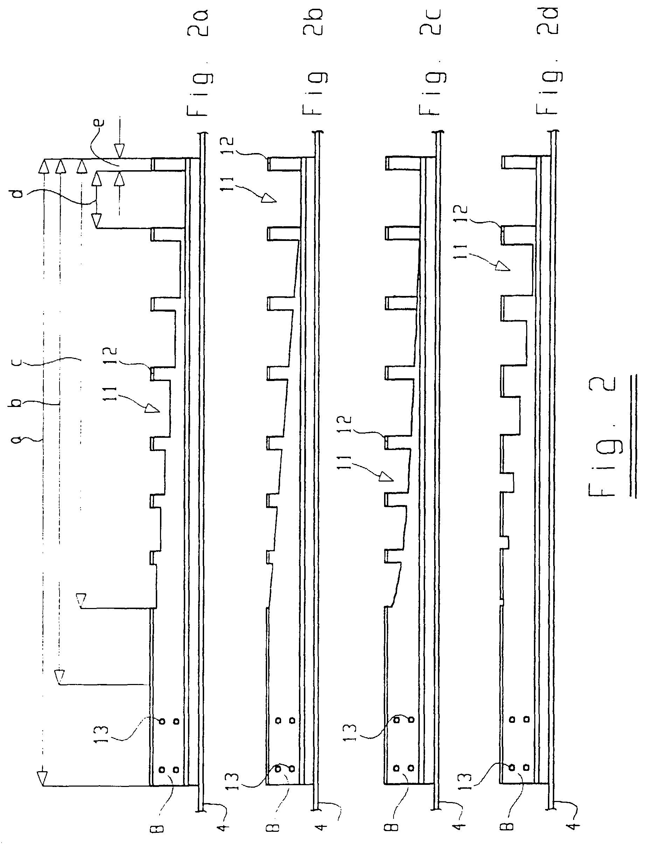

Fig. 2 zeigt verschiedene Seitenansichten des Federbalkens 8, in den der Fahrdraht 4 eingelegt und an ihm befestigt ist. Der Fahrdraht 4 wird seriell, d.h. fluchtlinienartig und kontinuierlich mit dem Federbalken gekoppelt, was jeglichen elektrischen Spannungsabfall und jegliche Störungen am Stromabnehmerlauf vermeidet. Der Federbalken 8 hat in seiner Längsrichtung mehrere Ausnehmungen 11, zwischen denen Abschnitte 12 des vollständigen Profiles stehen bleiben. Die Ausnehmungen 11 haben im Ausführungsbeispiel der Fig. 2a zunehmende Tiefe und jeweils eine ebene, parallel zum Fahrdraht verlaufende Unterseite. Bei einem konkreten Ausführungsbeispiel, das für Fahrgeschwindigkeiten von 140 km/h ausgelegt ist, besteht der Fahrdraht aus Elektrolytkupfer und hat einen Durchmesser von 12,25 mm. Die Fahrdrahtspannung beträgt 12 kN. Die Fahrdrahthöhe ist 4,85 m über Schienenoberkante. Der Stromabnehmerandruck liegt bei 70 N (statisch). Die Systemhöhe des Drahtwerkes beträgt 1,60 m und die Gewölbehöhe, d.h. der Abstand zwischen dem Fahrdraht und dem Scheitelpunkt des Tunnels liegt bei 40 cm über Fahrdrahthöhe. Bei diesem Ausführungsbeispiel beträgt (vgl. Fig. 2a) die Gesamtlänge a des Federbalkens 12 m. Der Abstand b vom Tragpunkt zum flexiblen Ende des Federbalkens beträgt 9 m. Die Länge c des federnden Bereiches vom Beginn der ersten Ausnehmung bis zum freien Ende des Federbalkens 8 beträgt 2,88 m. Die Länge d eine Ausnehmung beträgt 0,42 m und die Länge e der zwischen den Ausnehmungen stehengelassenen Abschnitte 12 beträgt 6 cm. Es sind insgesamt sechs Ausnehmungen 11 vorgesehen. Der Abstand vom freien Ende des Federbalkens zum Tunnelportal liegt bei 3 m.

Bei der Variante der Fig. 2b verläuft die Unterseite der Ausnehmungen 11 schräg entlang einer geraden Linie. Bei der Variante der Fig. 2c verläuft die Unterseite der Ausnehmungen 11 nach einer gekrümmten Linie, die beginnend am starren Bereich des Federbalkens steiler abfällt und zum Ende hin flacher wird. Durch den Verlauf dieser Krümmungslinie läßt sich die Federeigenschaft in Längsrichtung des Federbalkens gezielt variieren.

Bei der Variante der Fig. 2d haben die Ausnehmungen 11 vom starren zum flexiblen Ende hin eine zunehmende Breite und gleichzeitig, entsprechend Fig. 2a, auch eine zunehmende Tiefe. Auch hierdurch lassen sich die Federeigenschaften variieren. Selbstverständlich kann man die Variante der Fig. 2d mit denen der Fig. 2b und 2c kombinieren.

Bei allen Varianten ist die Bedingung erfüllt, daß der Federbalken mit seinen Ausnehmungen bzw. Ausfräsungen einerseits ausreichende Klemmkraft für die Halterung des Fahrdrahtes 4 aufbringt und andererseits zum flexiblen Ende hin eine sehr geringe Steifigkeit aufweist. Die erste Bedingung wird durch die Abschnitte 12 des vollen Profiles erreicht, die ausreichende Klemmkraft bringen. Die zweite Bedingung erklärt, daß die Ausnehmungen immer tiefer werden müssen. Im Bereich des freien flexiblen Endes des Federbalkens ist das Profilträgheitsmoment sehr klein und die Hauptachse liegt so tief wie möglich nahe der Ebene des Fahrdrahtes, so daß auch bei Schwingungen des Fahrdrahtes nur sehr geringe relative Kräfte zwischen dem Fahrdraht und dem Ende des Federbalkens auftreten. Dadurch werden insbesondere Ermüdungsbrüche vermieden. Der relativ flexible hängende Fahrdraht schwingt, angeregt durch die Stromabnehmer mit relativ hoher Frequenz, die deutlich über der Schwingungsfrequenz des starren Stromlinienprofiles liegt. An der Eintrittsstelle des Fahrdrahtes zum Federbalken ist daher das Profil aufgrund der guten Flexibilität in der Lage, mit der gleich hohen Frequenz wie der freihängende Fahrdraht, zu schwingen, wobei dann der Federbalken über seine gesamte Länge diese Schwingungen dämpft.

Schließlich zeigt Fig. 2 noch am stromschienenseitigen Ende des Federbalkens 8 mehrere Bohrungen 13 zur Befestigung der eingangs genannten Stoßlaschen.

Fig. 3 zeigt einen Querschnitt des Federbalkens 8 im Bereich der Stoßlaschen 7. Das Profil des Federbalkens 8 ist spiegelsymmetrisch zu einer Mittelachse und hat einen ebenen, horizontalen Träger 21, von dem senkrecht zwei Schenkel 23 abstehen, die an ihrem unteren Ende jeweils in einen schräg nach innen in Richtung zur Achse verlaufenden Klemmschenkel 26 münden, die jeweils eine Klemmspitze 27 aufweisen und zwischen sich den Fahrdraht 4 einspannen. Der Träger 21, die beiden Schenkel 23 und die Klemmschenkel 26 bilden eine im wesentliche rechteckige Laschenkammer 22, in die die Stoßlaschen 7 eingesetzt werden und mit Schrauben 20, die durch Löcher 13 in den Schenkeln 23 hindurchgesteckt werden, befestigt werden. Im Ausführungsbeispiel der Fig. 3 haben die Stoßlaschen Gewindebohrungen zur Aufnahme der Schrauben 20. Die Stoßlaschen 7 sind an ihren den zugeordneten Schenkeln 23 zugeordneten Außenseiten mit Längsrippen 9 versehen, die eine linienförmige, definierte Kontaktfläche an den Innenseiten der Schenkel 23 der Stromschiene 3 und des Federbalkens 8 herstellen. Diese Längsrippen 9 haben im Querschnitt die Form eines Zylindersegmentes. Sie können aber auch dreieckig sein. Im konkreten Ausführungsbeispiel hat jede Stoßlasche 7 vier Längsrippen. Weiter sind die Stoßlaschen oben und unten mit Abschrägungen 10 versehen. Der Übergangsbereich zwischen dem Träger 21 und den Schenkeln 23 im Inneren der Laschenkammer 22 ist ebenfalls mit einer entsprechenden Abschrägung 10' versehen. Schließlich laufen auch die Klemmschenkel 26 mit entsprechender Schrägung zu den Schenkeln 23. Werden die Stoßlaschen 7 mittels der Schrauben 20 festgezogen, so werden die entsprechenden Schrägen aneinander gezogen und die Stoßlasche verbindet die Stromschienenprofilabschnitte formschlüssig und damit weitestgehend biegesteif. Der Zweck der an den Stoßlaschen angebrachten Längsrippen 9 liegt darin, eine definierte Kontaktfläche zur Übertragung des elektrischen Stromes von einem Profilabschnitt (Stromschienenprofil 3) zum anderen (Federbalken 8) zu übertragen.

In Fig. 3 ist weiter zu erkennen, daß der horizontale Träger 21 beidseitig mit Armen 22 über die Außenkontur der Schenkel hinausragt, wobei im Übergangsbereich zwischen der Unterseite der Arme 22 und der Außenseite der Schenkel 23 ebenfalls eine Abschrägung 24 vorhanden ist. Im unteren Bereich der Schenkel 23 nahe dem Übergang zu den Klemmschenkeln 26 sind ebenfalls beidseitig von der Außenseite der Schenkel 23 abstehende Arme vorgesehen, deren Unterseite eine trapezförmige Ausnehmung 25 aufweist, an die sich dann die Klemmschenkel 26 anschließen. Dieses Profil insgesamt ist ausreichend steif, den Fahrdraht 4 einzuklemmen und sicher zu halten und im Bereich des starren Stromschienenprofils die erforderliche Biegesteifigkeit in Längsrichtung sicherzustellen. In der Ausbildung als Federbalken 8 mit den Aussparungen 11 (Fig. 2) ist es dagegen in Längsrichtung so flexibel, um die einwandfreie Kopplung zwischen dem flexiblen, hängenden Drahtwerk und dem starren Profil herzustellen.

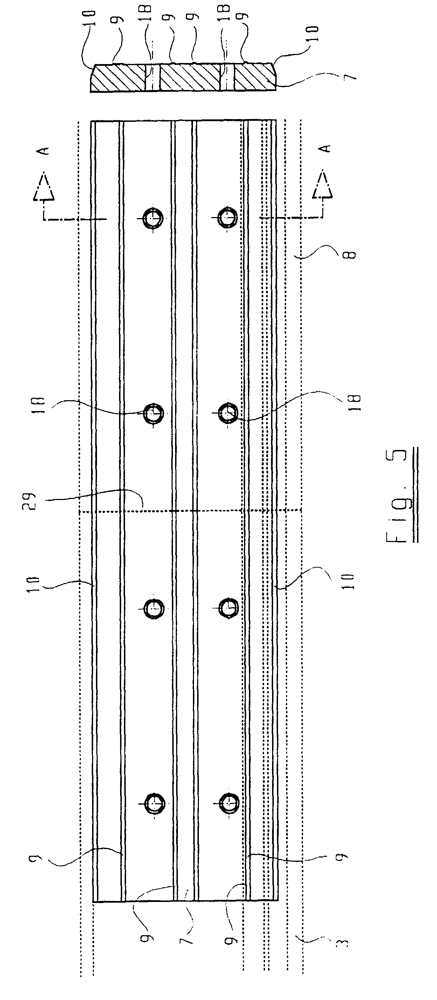

Fig. 5 zeigt eine Seitenansicht einer Stoßlasche 9 im Verbindungsbereich zwischen der starren Stromschiene 3 und dem Federbalken 8, wobei deren Stoßkante durch die gestrichelte Linie 29 dargestellt ist. Die Stoßlasche 7 wird mittig zu dieser Linie 29 in die Profile eingelegt, so daß ihre eine Hälfte in Längsrichtung in der starren Stromschiene 3 und ihre andere Hälfte in dem Federbalken 8 liegt. In diesen beiden Hälften hat die Stoßlasche je vier Gewindebohrungen 18 zum Einschrauben der Schrauben 20 (Fig. 3).

Im rechten Teil der Fig. 5 ist noch einmal - ähnlich wie in Fig. 4 - ein Schnitt längs der Linie A-A durch die Stoßlasche gezeigt. Schließlich ist aus Fig. 5 noch zu erkennen, daß die Längsrippen 9 sich über die gesamte Länge der Stoßlasche erstrecken.

Fig. 6 zeigt einen Querschnitt des starren Stromlinienprofiles 3 mit eingeklemmtem Fahrdraht 4. Dieses Profil entspricht im Querschnitt vollständig dem des Federbalkens 8 der Fig. 3, so daß an der Verbindungsstelle (Linie 29 in Fig. 5) die beider. Profile 3 und 8 konturengleich ineinander übergehen.

Zusammenfassend schafft die Erfindung einen elastischen Übergang von einem flexiblen, hängenden Drahtwerk zu einer starren Stromschiene durch eine elastische Kopplung, deren Biegefestigkeit vom Fahrdrahteinlauf zur Stromschiene hin allmählich zunimmt. Die Kopplung erfolgt dabei seriell, d.h. ohne seitlichen Versatz zwischen Stromschiene und Fahrleitung. Bei der Vorrichtung nach der Erfindung läßt sich der Federbalken einfach an die betriebsmäßigen Anforderungen anpassen und insbesondere an die verlangten Betriebsgeschwindigkeiten des Triebfahrzeuges, was durch Anpassung der Aussparungen hinsichtlich Form und Abstand möglich ist, womit der Federbalken an jegliche betriebsmäßige Anforderungen leicht adaptiert werden kann und trotzdem einfach herzustellen ist. Der Kopplungsbereich ist perfekt mechanisch an das Schienenprofil angepaßt, insbesondere hinsichtlich der Biegesteifigkeit und erlaubt durch die Kontaktflächen mit den scnrägen Ober- und Unterseiten sowie den Längsrippen eine unkritische, verlustarme, elektrische Ankopplung der Profile.

## Patentansprüche

1. Verfahren zur Kopplung von elastischen und starren Fahrleitungssystemen zur Speisung von elektrischen Triebfahrzeugen, dadurch gekennzeichnet, daß die elastische Fahrleitung und die starre Fahrleitung, z.B. eine Stromschiene, seriell elastisch gekoppelt sind.

2. Verfahren nach Anspruch 1, dadurch gekennzeichnet, daß das elastische Koppeln längs eines Übergangsbereiches erfolgt, dessen Elastizität vom starren zum elastischen Fahrleitungsabschnitt kontinuierlich zunimmt.

3. Verfahren nach Anspruch 1 oder 2, dadurch gekennzeichnet, daß die Kopplung seriell mit geradliniger Führung des stromführenden Pfades erfolgt.

4. Vorrichtung zur Kopplung von elastischen und starren Fahrleitungssystemen zur Speisung von elektrischen Triebfahrzeugen, gekennzeichnet durch einen im Übergangsbereich zwischen dem starren Fahrleitungssystem (3) und dem elastischen Fahrleitungssystem (2) angeordneten, langgestreckten Federbalken (8), dessen mechanische Steifigkeit in Längsrichtung stetig variiert ist.

5. Vorrichtung nach Anspruch 4, dadurch gekennzeichnet, daß der Federbalken (8) an seiner dem Fahrdraht (4) abgewandten Oberseite mehrere in Längsrichtung verteilt angeordnete Ausnehmungen (11) aufweist.

6. Vorrichtung nach Anspruch 5, dadurch gekennzeichnet, daß die Tiefe der Ausnehmungen (11) von dem mit dem starren Fahrleitungssystem verbundenen Ende des Federbalkens (8) zum mit dem flexiblen Fahrleitungssystem (4.2) verbundenen Ende des Federbalkens (8) zunimmt.

7. Vorrichtung nach Anspruch 6, dadurch gekennzeichnet, daß jede Ausnehmung (11) für sich genommen eine konstante Tiefe aufweist.

8. Vorrichtung nach Anspruch 6, dadurch gekennzeichnet, daß die Tiefe jeder Ausnehmung (11) für sich genommen stetig zunimmt.

9. Vorrichtung nach Anspruch 5, dadurch gekennzeichnet, daß die Breite der Ausnehmung (11) des Federbalkens (8) vom starren zum flexiblen Ende hin zunimmt.

10. Vorrichtung nach einem der Ansprüche 4 bis 9, dadurch gekennzeichnet, daß der Federbalken (8) mit dem starren Fahrleitungssystem (4.1) durch an ihren Enden mit Schrägen (10) versehene und an ihren Seitenwänden mit Längsrippen (9) versehene Stoßlaschen (7) mechanisch formschlüssig und elektrisch verbunden sind.

## Claims

1. Process for coupling elastic and rigid contact line systems for the purpose of providing power to electrically driven vehicles, characterized in that the elastic contact line and the rigid contact line, for example a contact rail, are elastically coupled in series.

2. Process, in accordance with Claim 1, characterized in that the elastic coupling takes place along a transitional area whose elasticity continuously increases from the rigid to the elastic contact line section.

3. Process, in accordance with Claim 1 or 2, characterized in that the coupling is in series with a straight-line guidance of the current-conducting path.

4. Apparatus for coupling elastic and rigid contact line systems for providing power to electrically driven vehicles, characterized by an elongated spring pole (8), arranged in the transitional area between the rigid contact line system (3) and the elastic contact line system (2) whose mechanical rigidity in the longitudinal direction is constantly varied.

5. Apparatus, in accordance with Claim 4, characterized in that the spring pole (8), on its upper side which is turned away from the overhead contact wire (4), has several recesses (11) distributed in the longitudinal direction.

6. Apparatus, in accordance with Claim 5, characterized in that the depth of the recesses (11) increases from the end of the spring pole (8) connected with the rigid contact line system to the end of the spring pole (8) connected with the flexible contact line system (4.2).

7. Apparatus, in accordance with Claim 6, characterized in that each recess (11), taken individually, has a constant depth.

8. Apparatus, in accordance with Claim 6, characterized in that the depth of each recess (11), taken individually, increases constantly.

9. Apparatus, in accordance with Claim 5, characterized in that the width of the recess (11) of the spring pole (8) increases from the rigid end to the flexible end.

10. Apparatus, in accordance with one of Claims 4-9, characterized in that the spring pole (8) is mechanically connected in a form-locking manner and electrically connected with the rigid contact line system (4.1) by means of butt straps (7) provided at their ends with tapered areas (10) and at its side walls with longitudinal ribs (9).

## Revendications

1. Procédé d'accouplement de systèmes de lignes de contact élastiques et rigides pour l'alimentation de véhicules de traction électriques, caractérisé en ce que la ligne de contact élastique et la ligne de contact rigide, par exemple une barre de distribution, sont accouplées en série de façon élastique.

2. Procédé selon la revendication 1, caractérisé en ce que l'accouplement élastique s'effectue le long d'une zone de transition dont l'élasticité augmente de façon continue à partir de la section de ligne de contact rigide jusqu'à la section de ligne de contact élastique.

3. Procédé selon la revendication 1 ou 2, caractérisé en ce que l'accouplement s'effectue en série avec un guidage rectiligne de la ligne conductrice.

4. Dispositif d'accouplement de systèmes de lignes de contact élastiques et rigides pour l'alimentation de véhicules de traction électriques, caractérisé par une poutre élastique (8) allongée disposée dans la zone de transition entre le système de ligne de contact rigide (3) et le système de ligne de contact élastique (2), la rigidité mécanique de cette poutre élastique variant dans le sens longitudinal de façon continue.

5. Dispositif selon la revendication 4, caractérisé en ce que la poutre élastique (8) présente sur sa face supérieure orientée à l'opposé du fil de contact (4) plusieurs encoches (11) réparties dans le sens longitudinal.

6. Dispositif selon la revendication 5, caractérisé en ce que la profondeur des encoches (11) augmente à partir de l'extrémité de la poutre élastique (8) reliée au système de ligne de contact rigide jusqu'à l'extrémité de la poutre élastique (8) reliée au système de ligne de contact flexible (4.2).

7. Dispositif selon la revendication 6, caractérisé en ce que chaque encoche (11) en soi présente une profondeur constante.

8. Dispositif selon la revendication 6, caractérisé en ce que la profondeur de chaque encoche (11) en soi augmente de façon continue.

9. Dispositif selon la revendication 5, caractérisé en que la largeur de l'encoche (11) de la poutre élastique (8) augmente à partir de l'extrémité rigide jusqu'à l'extrémité flexible.

10. Dispositif selon l'une des revendications 4 à 9, caractérisé en ce que la poutre élastique (8) est reliée mécaniquement de façon solidaire ainsi qu'électriquement au système de ligne de contact rigide (4.1) par des éclisses (7) pourvues de biseaux (10) sur leurs extrémités et de nervures longitudinales (9) sur leurs faces latérales.
